**Europäisches Patentamt**

**European Patent Office**

**Office européen des brevets**

(11) Veröffentlichungsnummer: **0 030 317**
**B1**

# EUROPÄISCHE PATENTSCHRIFT

(45) Veröffentlichungstag der Patentschrift:
**20.07.83**

(51) Int. Cl.³: **G 11 B 21/08**

(21) Anmeldenummer: **80107338.8**

(22) Anmeldetag: **25.11.80**

(54) Abspielgerät für einen scheibenförmigen Aufzeichnungsträger, insbesondere Bild- oder Tonplatte.

(30) Priorität: 06.12.79 DE 2949015
27.06.80 DE 3024120

(43) Veröffentlichungstag der Anmeldung:
**17.06.81 Patentblatt 81/24**

(45) Bekanntmachung des Hinweises auf die Patenterteilung:
**20.07.83 Patentblatt 83/29**

(84) Benannte Vertragsstaaten:
**AT BE CH DE FR GB IT LI LU NL SE**

(56) Entgegenhaltungen:
**DE-A-2 122 639**
**DE-A-2 608 396**
**DE-A-2 843 555**
**DE-A-2 854 280**

(73) Patentinhaber: **Licentia Patent-Verwaltungs-GmbH,**
**Theodor-Stern-Kai 1, D-6000 Frankfurt/Main 70 (DE)**

(72) Erfinder: **Redlich, Horst, Plassstrasse 37,**
**D-1000 Berlin 37 (DE)**
Erfinder: **Krause, Franz-Eberhard, Dipl.-Ing.,**
**Ortrudstrasse 3, D-1000 Berlin 41 (DE)**
Erfinder: **Hartmann, Werther, Humperdinckstrasse 8,**
**D-1000 Berlin 46 (DE)**

(74) Vertreter: **Einsel, Robert, Dipl.-Ing., Theodor-Stern-Kai 1,**
**D-6000 Frankfurt/Main 70 (DE)**

Abspielgerät für einen scheibenförmigen Aufzeichnungsträger, insbesondere Bild- oder Tonplatte

Es ist bekannt, ein elektrisches Signal entlang einer spiralförmigen Spur einer folienförmigen oder starren Platten aufzuzeichnen. Auf diese Weise kann z.B. ein Bildsignal durch Frequenzmodulation eines Trägers, ein Tonsignal durch Frequenzmodulation eines Trägers oder ein Tonsignal in PCM-Technik aufgezeichnet werden. Bei der bekannten Druckabtastung (DE-PS Nr. 1574489) ist das Signal in Form reliefartiger Erhebungen entlang der Spur (Rille) aufgezeichnet und wird mit einem Druckabtaster abgetastet, der diese Erhebungen niederdrückt.

Insbesonderere bei derartigen Platten mit langer Spieldauer sind im allgemeinen auf einer Platte mehrere Title aufgezeichnet. Dabei entsteht der Wunsch, einen bestimmten Titel möglichst schnell finden zu können, da oftmals der Bedienende nicht die gesamte Platte hören will.

Bei Schallplatten ist es bekannt, zwischen den einzelnen Titeln sichtbare Zwischenräume vorzusehen. Durch diese Lösung geht jedoch Aufzeichnungsfläche verloren, was insbesondere bei den heute entwickelten, besonders kleinen Aufzeichnungsträgern nachteilig wäre.

Es ist auch bekannt, die Aufzeichnungsspur mit zusätzlichen Adressen zu versehen, die eine absolute Information für die jeweilige Stelle der Spur beinhalten. Der Bedienende braucht dann nur die Zuordnung zwischen dem Anfang des gewünschten Titels und der dort aufgezeichneten Adresse zu kennen. Dann ist es möglich, den Abtaster bis zu dieser Adresse laufen zu lassen und dann den Abspielvorgang einzuleiten. So ist es bekannt, bei der Aufzeichnung eines Fernsehsignals die einzelnen Bilder fortlaufend mit einem bestimmten Code zu numerieren. Diese Lösung hat den Nachteil, dass der Abtaster für den Suchvorgang mit dem Aufzeichnungsträger in Berührung bleibt und wegen der begrenzten Geschwindigkeit relativ viel Zeit zum Auffinden der gewünschten Stelle vergeht.

Es ist ferner bekannt (DE-OS Nr. 2854280), bei einem Aufzeichnungsgerät für einen scheibenförmigen, mit Adressen versehenen Aufzeichnungsträger, z.B. einer Bildplatte, die Adresse einer gewünschten Stelle des Aufzeichnungsträgers, z.B. eines gewünschten Titels, manuell in einen Speicher einzugeben. In den Speicher wird ausserdem automatisch die Adresse des Aufzeichnungsträgers eingegeben, die der an beliebiger Stelle auf den Aufzeichnungsträger aufgesetzte Abtaster liest. Der Speicher errechnet aus diesen beiden Adressen nach Betrag und Richtung die Differenz zwischen der Stelle, an der der Abtaster steht, und der jeweils gewünschten Stelle des Aufzeichnungsträgers. Entsprechend dieser Differenz bewegt sich der Abtaster selbsttätig in Radialrichtung, gegebenenfalls im vom Aufzeichnungsträger abgehobenen Zustand, und beginnt an der der eingegebenen Adresse entsprechenden Stelle die Abtastung, so dass die Wiedergabe an der gewünschten Stelle, z.B. mit einem ausgewählten Titel, beginnt.

Bei einer derartigen Lösung muss beim Aufsetzen nach dem erfolgten Suchlauf noch eine bestimmte Toleranz berücksichtigt werden, damit der Abtaster nicht schon in dem gewünschten Titel, sondern etwas vor dem gewünschten Titel aufsetzt. Die Notwendigkeit dafür ergibt sich unter anderem aus in der Praxis unvermeidbaren Exzentrizitäten der Rille zum Drehmittelpunkt der Platte. Beispielsweise bei einer Umdrehungszahl von 375/min, einer Rillenbreite von 2,5 µm und einem Radialschlag aufgrund von Exzentrizitäten von ± 25 µm ergibt sich durch das verfrühte Aufsetzen bereits eine zusätzliche Wartezeit von 3,2 s. Die Genauigkeit des Aufsetzens des Abtasters nach diesem Suchlauf wird also durch die genannte Exzentrizität beträchtlich verringert bzw. die Wartezeit zwischen Aufsetzen und Beginn des gewünschten Titels erhöht.

Der Erfindung liegt die Aufgabe zugrunde, das zuletzt beschriebene Abspielgerät so weiterzubilden, dass der Einfluss von Exzentrizitäten der Rille auf die Genauigkeit des Aufsetzpunktes verringert wird.

Diese Aufgabe wird durch die im Anspruch 1 beschriebene Erfindung gelöst. Eine vorteilhafte Ausbildung der Erfindung ist im Anspruch 2 beschrieben.

Die Erfindung beruht auf der Erkenntnis, dass eine Exzentrizität der Rille auf die Genauigkeit des Suchlaufes keinen Einfluss mehr hat, wenn das Aufsetzen zur Entnahme der Probeadresse und das Aufsetzen des Abtasters nach dem erfolgten Suchlauf immer bei derselben Winkelstellung des Aufzeichnungsträgers zum Abtaster erfolgen. Die Punkte auf dem Aufzeichnungsträger, bei denen jeweils das Aufsetzen zur Entnahme der Probeadresse und Aufsetzen des Abtasters nach dem Suchlauf erfolgen, liegen also auf einer radialen Linie des Aufzeichnungsträgers, wenn dieser einmal auf den Antriebsteller aufgelegt ist. Wo, über den Umfang gemessen, diese Radiallinie liegt, ist dabei nicht von Bedeutung. Wenn also ein Aufzeichnungsträger mehrmals neu auf den Antriebsteller aufgelegt wird, kann diese Radiallinie auf dem Aufzeichnungsträger jeweils an ganz verschiedenen Stellen liegen. Die Entnahme der Probeadresse und das Aufsetzen des Abtasters nach dem Suchlauf erfolgen also jeweils nur dann, wenn zwei Kriterien erfüllt sind, nämlich einmal der Befehl, zur Entnahme der Probeadresse oder zum Abtasten nach dem Suchlauf aufzusetzen, und zum anderen die Information, dass der Aufzeichnungsträger einen definierten Drehwinkel hat. Diese beiden Kriterien werden vorzugsweise in einer UND-Stufe verarbeitet, deren Ausgang dann die Entnahme der Probeadresse oder das Aufsetzen nach dem Suchlauf auslöst.

Die Erfindung wird anhand der Zeichnung an einem Ausführungsbeispiel erläutert. Darin zeigen:

Fig. 1 ein Blockschaltbild der erfindungsgemässen Schaltung,

Fig. 2 Kurven zur Erläuterung der Wirkungsweise, und

Fig. 3 die Wirkungsweise der Erfindung an einem Aufzeichnungsträger mit einer exzentrischen Rille.

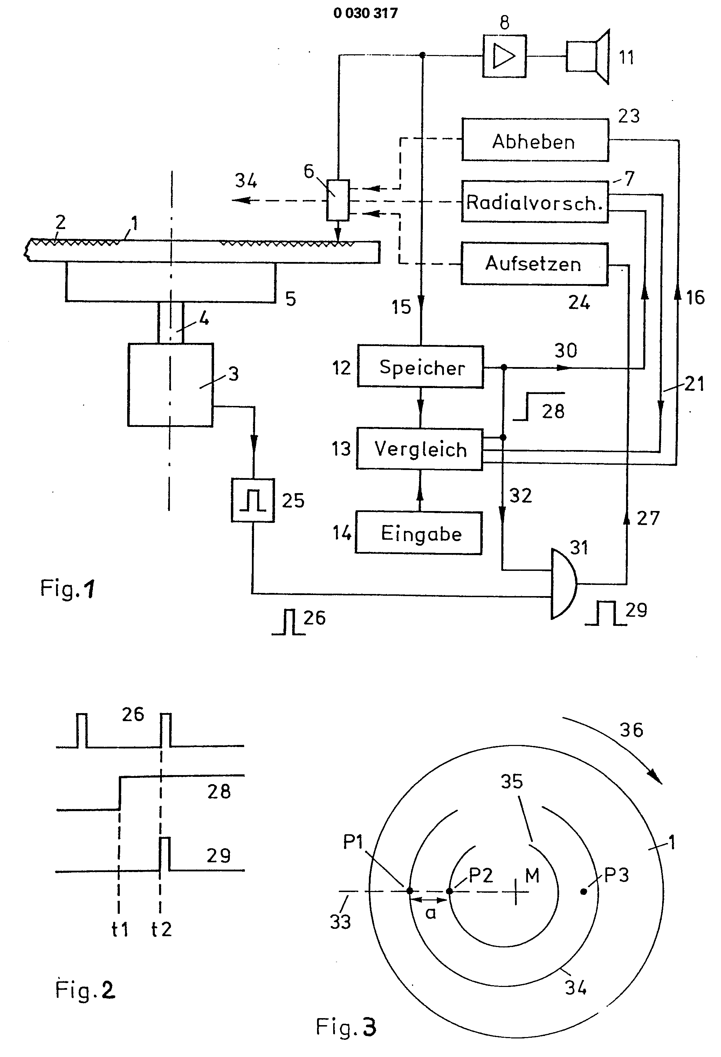

In Fig. 1 wird die Platte 1, die mit der Aufzeichnungsfläche 2 versehen ist, von dem Motor 3 über die Welle 4 und den Plattenteller 5 in Drehbewegung versetzt. Die Abtastung der durch eine spiralförmige Rille gebildeten Aufzeichnungsfläche 2 erfolgt mit dem Abtaster 6, der durch den Antrieb 7 radial zur Platte 1 bewegt wird. Durch die Steuereinheit 23 ist der Abtaster 6 von der Platte 1 abhebbar und durch die Steuereinheit 24 auf die Platte 1 aufsetzbar. Der Motor 3 liefert über einen Tachogenerator und den Impulsformer 25 Impulse 26, die jeweils bei einem bestimmten Drehwinkel der Platte 1 relativ zum Abtaster 6 auftreten. Es werden jetzt die einzelnen Vorgänge beim Suchlauf und beim Abtastvorgang nacheinander beschrieben.

Der Abtaster 6 steht zunächst in Radialrichtung der Platte 1 an beliebiger Stelle und ist noch von der Platte 1 abgehoben. Die Platte 1 rotiert bereits, und der Impulsformer 25 liefert auch bereits die Impulse 26 an die UND-Stufe 31. Von der Leitung 32 kommt kein Signal zur UND-Stufe 31, so dass am Ausgang der UND-Stufe zunächst kein Signal steht.

Im Zeitpunkt t1 erscheint an der Leitung 32 der Impuls 28, der ein Aufsetzen des Abtasters 6 für die Probeentnahme auslösen soll. Der Impuls 28 kann durch eine manuelle Betätigung oder durch einen automatisierten Ablauf ausgelöst werden. In diesem Zeitpunkt t1 erscheint am Ausgang der UND-Stufe 31 noch kein Signal, der Abtaster 6 bleibt also zunächst noch abgehoben. Im Zeitpunkt t2 erscheint der erste Impuls 26 gleichzeitig mit dem Impuls 28. Dieses ist der Zeitpunkt, in dem der Abtaster 6 sich auf der in Fig. 3 gezeichneten Radiallinie 33 befindet, die Platte 1 also einen ganz bestimmten Drehwinkel aufweist. Jetzt erscheint am Ausgang der UND-Stufe 31 der Impuls 29. Dieser gelangt über die Leitung 27 zu der Einheit 24, die den Abtaster 6 auf die Platte 1 aufsetzt. Der Abtaster 6 entnimmt jetzt auf der Radiallinie 33 der Platte 1 eine Probeadresse und führt diese über die Leitung 15 dem Speicher 12 zu. Von dort gelangt die Adresse zu der Vergleichsstufe 13. Zur Vergleichsstufe 13 gelangt ausserdem von der Eingabe 14 die Adresse für den gewünschten Titel. Durch Vergleich der vom Speicher 12 gelieferten Probeadresse und er von der Eingabe 14 kommenden Adresse wird jetzt errechnet, um welchen Betrag in Millimeter sich der Abtaster 6 in Radialrichtung zu der gewünschten Stelle bewegen muss. Der Abtaster 6 wird nach Entnahme einer Probeadresse von der Platte 1 abgehoben. Die UND-Stufe 31 ist noch mit einer Halteschaltung, z.B. einer nachgeschalteten Kippstufe, versehen. Diese hält den Impuls 29 so lange aufrecht, bis jeweils der Befehl zum Abheben des Abtasters kommt.

### Suchlauf

Über die Leitung 30 und den Antrieb 7 wird nach Speicherung der Probeadresse der Radialvorschub für den abgehobenen Abtaster 6 eingeleitet, so dass sich dieser nunmehr in Richtung 34 bewegt. Diese Radialbewegung wird über die Leitung 21 in Form von Impulsen der Vergleichsstufe 13 mitgeteilt. Diese Impulse kommen z.B. von einem gesonderten Motor, der den Suchlauf des Abtasters 6 bewirkt. In der Vergleichsstufe 13 werden jetzt die Impulse von der Leitung 21, die den Radialvorschub beim Suchlauf darstellen, mit dem zum Auffinden des gewünschten Titels notwendigen Radialvorschub verglichen. Wenn der Radialvorschub den gewünschten Wert erreicht hat, entsteht an der Leitung 32 wiederum ein Impuls 28 gemäss Fig. 2. Dieser Impuls schaltet zunächst über die Leitung 30 und den Antrieb 7 den Radialvorschub des noch abgehobenen Abtasters 6 ab.

### Aufsetzen des Abtasters nach dem Suchlauf

Nach Beendigung des beschriebenen Suchlaufes und Abschaltung des Radialvorschubes ist der Drehwinkel der Platte 1 zunächst noch unbestimmt. Deshalb erscheint auch am Ausgang der UND-Stufe 31 zunächst kein Impuls für den Aufsetzvorgang. Erst wenn der definierte Drehwinkel erreicht ist, der Abtaster 6 sich auf der Radiallinie 33 der Platte 1 befindet und der Impuls 26 von dem Impulsformer 25 auftritt, erscheint am Ausgang der UND-Stufe 31 der Impuls 29. Dieser bewirkt jetzt über die Leitung 27 und die Einheit 24 das Aufsetzen des Abtasters 6 auf die Platte 1, und zwar auf derselben Radiallinie 33, bei der die Probeentnahme vor dem Suchlauf erfolgte.

### Abspielvorgang

Aufgrund verschiedener Toleranzen erfolgt das Aufsetzen des Abtasters nach dem Suchlauf kurz vor Beginn des gewünschten Titels. Es besteht also in der Praxis eine kurze Wartezeit von 1 bis 2 s zwischen dem Aufsetzen des Abtasters 6 und dem Beginn des Titels. Damit der Bedienende nicht den Rest des vorangehenden Titels hört, wird vorzugsweise der Wiedergabekanal 8, 11 durch einen besonderen aufgezeichneten Impuls erst zu Beginn des Titels durchgeschaltet.

Fig. 3 zeigt die in Richtung 36 rotierenden Platte 1 mit zwei übertrieben, exzentrisch dargestellten Rillenabschnitten 34, 35 den spiralförmigen Rille. Die Entnahme der Probeadresse erfolgt im Punkt P1 auf dem Rillenabschnitt 34. Der daraufhin von der Vergleichsstufe 13 angelöste Radialvorschub zur Mitte ist durch die Strecke a dargestellt. Das Aufsetzen erfolgt im Punkt P2, wobei diese beiden Punkte P1 und P2 auf der Radiallinie 33 liegen. Es ist ersichtlich, dass die Exzentrizität der Rillenabschnitte keinen Einfluss auf den Aufsetzpunkt P2 relativ zum Rillenabschnitt 35 hat. Wenn, ohne die erfindungsgemässe Lösung, z.B. der Abtaster 6 nach Entnahme der Probe im Punkt P1 um die Wegstrecke a radial bewegt wird und das Aufsetzen bei einem um 180° versetzten Drehwinkel der Platte 1 erfolgt, würde der Abtaster 6 im Punkt P3 aufsetzen. Es ist ersichtlich, dass dieser Aufsetzpunkt nicht wie gewünscht auf dem Rillenabschnitt 35, sondern beträchtlich zu früh liegt.

## Patentansprüche

1. Abspielgerät für einen scheibenförmigen Aufzeichnungsträger, insbesondere Bild- oder Tonplate, mit Mitteln zum automatischen Auffinden bestimmter Stellen der mit Adressen versehenen Spur, wobei aus einer vom aufgesetzten Abtaster (6) gelieferten Probeadresse und einer eingegebenen, gewünschten Adresse die Differenz ermittelt wird und wobei der wieder vom Träger (1) abgehobene Abtaster (6) um eine der Differenz entsprechende Strecke (a) für den Suchlauf radial bewegt und dann wieder aufgesetzt wird, dadurch gekennzeichnet, dass der Aufsetzvorgang für die Abtastung der Probeadresse und der Aufsetzvorgang nach dem Suchlauf bei demselben Drehwinkel des Aufzeichnungsträgers (1) relativ zum Abtaster (6) erfolgen.

2. Gerät nach Anspruch 1, *dadurch gekennzeichnet,* dass das Signal (29) für das Aufsetzen vom Ausgang einer UND-Stufe (31) abgeleitet ist, an deren Eingänge ein Befehlsimpuls (28) für das Aufsetzen und ein jeweils bei einem bestimmten Drehwinkel auftretender Impuls (26) angelegt sind.

## Revendications

1. Appareil de lecture pour un support d'enregistrement en forme de disque, spécialement pour un disque de son ou d'image, avec des moyens pour trouver automatiquement des places déterminées de la trace pourvue des adresses, dans lequel est engendrée la différence entre une adresse d'épreuve délivrée par le lecteur (6) mis sur le support (1) et une adresse désirée et programmée, et dans lequel le lecteur (6) enlevé du support (1) est mû en direction radiale pour une marche de recherche d'une distance (a) correspondant à ladite différence, et puis mis sur le support (1), ledit appareil étant caractérisé en ce que l'action de mettre le lecteur (6) sur le support (1) pour prendre l'adresse d'épreuve et l'action de mettre le lecteur (6) sur le support (1) après la marche de recherche ont lieu au même angle de rotation du support (1) par rapport au lecteur (6).

2. Appareil selon la revendication 1, caractérisé en ce que le signal (29) pour l'action de mettre le lecteur (6) sur le support (1) est dérivé de la sortie d'un étage ET (31), aux entrées duquel sont appliquées une impulsion de commande (28) pour la mise sur le support (1) et une impulsion (26) produite à un angle de rotation déterminé.

## Claims

1. Apparatus for replaying a disc-shaped record carrier, especially a picture or sound plate, having means for automatically locating particular parts of the track which is provided with adresses, in which the difference between a probe address delivered by the applied pick-up (6) and a desired, inserted address is ascertained, and in which the pick-up (6), having been again disengaged from the carrier (1), moves radially for the search run by a distance (a) corresponding to the difference and is then reapplied, characterized in that the application action for picking up the probe address and the application action after the search run take place with the record carrier (1) at the same angle relative to the pick-up (6).

2. Apparatus according to claim 1, characterized in that the signal (29) for the application is derived from the output of an AND stage (31), to the inputs of which are applied an application command impulse (28) and an impulse (26) which arises on the occurence of a particular angle.

0 030 317

Fig.1

Fig.2

Fig.3